(19) Europäisches Patentamt
European Patent Office
Office européen des brevets

(11) Veröffentlichungsnummer: **0 073 391**
**B1**

# (12) EUROPÄISCHE PATENTSCHRIFT

(45) Veröffentlichungstag der Patentschrift: **06.03.85**

(51) Int. Cl.⁴: **C 07 C 101/36,** C 07 C 103/46, A 01 N 53/00

(21) Anmeldenummer: **82107417.6**

(22) Anmeldetag: **16.08.82**

## (54) 1-Amino-cyclopropancarbonsäure-Metallkomplexverbindungen, Verfahren zu deren Herstellung und deren Verwendung als Pflanzenwachstumsregulatoren.

(30) Priorität: **27.08.81 DE 3133917**

(43) Veröffentlichungstag der Anmeldung: **09.03.83 Patentblatt 83/10**

(45) Bekanntmachung des Hinweises auf die Patenterteilung: **06.03.85 Patentblatt 85/10**

(84) Benannte Vertragsstaaten: **AT BE CH DE FR GB IT LI NL**

(56) Entgegenhaltungen:
**EP - A - 0 005 782**
**EP - A - 0 030 287**

**Chemical Abstract 96, 45284U (1982)**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Schröder, Rolf, Dr., Pahlkestrasse 17, D-5600 Wuppertal 1 (DE)**
Erfinder: **Lürssen, Klaus, Dr., August-Kierspel-Strasse 89, D-5060 Bergisch-Gladbach 2 (DE)**

EP 0 073 391 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft neue 1-Amino-cyclopropancarbonsäure-Metallkomplexverbindungen, ein Verfahren zu ihrer Herstellung und ihre Verwendung als Pflanzenwachstumsregulatoren. Die Erfindung betrifft ferner auch die Verwendung von bekannten 1-Amino-cyclopropancarbonsäure-Metallkomplexverbindungen zur Regulierung des Pflanzenwachstums.

Aus der DE-A-2 824 517 und der EP-A-0 005 782 sind bereits zahlreiche 1-Amino-cyclopropan-1-carbonsäure-Derivate und deren Einsatz zur Regulierung des Pflanzenwachstums bekannt. Es werden jedoch keine von der 1-Amino-cyclopropan-1-carbonsäure abgeleitete Metallkomplex-Verbindungen beschrieben, die ein Übergangsmetallatom mit der Koordinationszahl 4 enthalten. Von den in der DE-A-2 824 517 und der EP-A-0 005 782 offenbarten Substanzen läßt sich zum Beispiel das 1-Amino-cyclopropan-1-carbonsäure-hydrochlorid zur Beeinflussung des Pflanzenwachstums verwenden. Die Wirkung dieses Stoffes ist jedoch, insbesondere beim Einsatz niedriger Aufwandmengen, nicht immer in jeder Hinsicht zufriedenstellend.

Es wurde nun gefunden, daß sich 1-Amino-cyclopropan-carbonsäure-Metallkomplex-Verbindungen der Formel

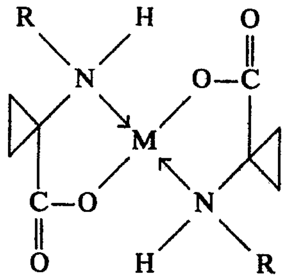

(I)

in welcher

R für Wasserstoff oder den Rest der Formel $-CO-R^1$ steht, worin
$R^1$ für Wasserstoff, Alkyl mit 1 bis 4 Kohlenstoffatomen oder Phenyl steht,
und
M für Kupfer, Zink, Mangan, Eisen, Cobalt oder Nickel steht,

durch starke pflanzenwuchsregulierende Eigenschaften auszeichnen.

Weiterhin wurden neue 1-Amino-cyclopropancarbonsäure-Metallkomplex-Verbindungen der Formel

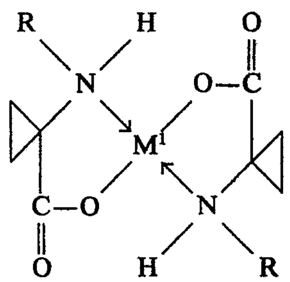

(Ia)

in welcher

R für Wasserstoff oder den Rest der Formel $-CO-R^1$ steht, worin
$R^1$ Wasserstoff, Alkyl mit 1 bis 4 Kohlenstoffatomen oder Phenyl steht,
und
$M^1$ für Zink, Mangan, Eisen, Cobalt oder Nickel steht,

gefunden.

Weiterhin wurde gefunden, daß man die neuen 1-Aminocyclopropancarbonsäure-Metallkomplexverbindungen der Formel (Ia) erhält, wenn man Cyclopropancarbonsäure-Derivate der Formel

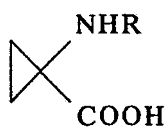

(II)

in welcher

R die oben angegebene Bedeutung hat,

mit Übergangsmetallverbindungen der Formel

$M^1Z$ (III)

in welcher

$M^1$ die oben angegebene Bedeutung hat und
Z für Sauerstoff, Carbonat, Sulfat, zwei Hydroxy-Gruppen oder zwei Halogenid-Ionen steht,

in Gegenwart eines Verdünnungsmittels umsetzt.

Überraschenderweise besitzen die erfindungsgemäß verwendbaren 1-Amino-cyclopropancarbonsäure-Metallkomplexverbindungen der Formel (I) eine bessere pflanzenwuchsregulierende Wirksamkeit als das 1-Amino-cyclopropan-1-carbonsäure-hydrochlorid, welches ein konstitutionell ähnlicher, aus der DE-A-2 824 517 bzw. der EP-A-0 005 782 vorbekannter Wirkstoff gleicher Wirkungsrichtung ist.

Die erfindungsgemäß verwendbaren 1-Amino-cyclopropancarbonsäure-Metallkomplexverbindungen sind durch die Formel (I) allgemein definiert.

Eine besonders bevorzugte Gruppe von Verbindungen sind diejenigen Stoffe der Formel (I), in denen

R für Wasserstoff oder Formyl steht und
M für Kupfer, Zink oder Mangan steht.

Eine weitere Gruppe besonders bevorzugter Verbindungen sind diejenigen Stoffe der Formel (I), in denen

R für Wasserstoff oder Formyl steht und
M für Eisen, Cobalt oder Nickel steht.

Besonders bevorzugt sind schließlich auch diejenigen Verbindungen der Formel (I), in denen

R für den Rest der Formel $-CO-R^1$ steht, worin
$R^1$ für Methyl, Ethyl, n-Propyl, iso-Propyl, n-Butyl, iso-Butyl, sec.-Butyl, tert.-Butyl oder Phenyl steht,
und
M für Kupfer, Zink, Mangan, Eisen, Cobalt oder Nickel steht.

Die Kupferkomplex-Verbindung der Formel

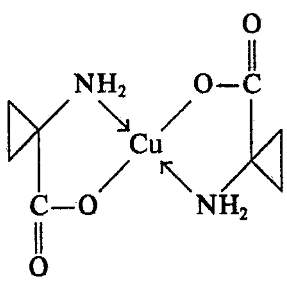

ist bereits bekannt (vgl. Chemical Abstracts 96, 45 284 u (1982)).

Verwendet man beispielsweise 1-Formylamino-cyclopropan-1-carbonsäure und Mangan(II)-sulfat als Ausgangsstoffe, so kann der Verlauf des erfindungsgemäßen Verfahrens durch das folgende Formelschema wiedergegeben werden.

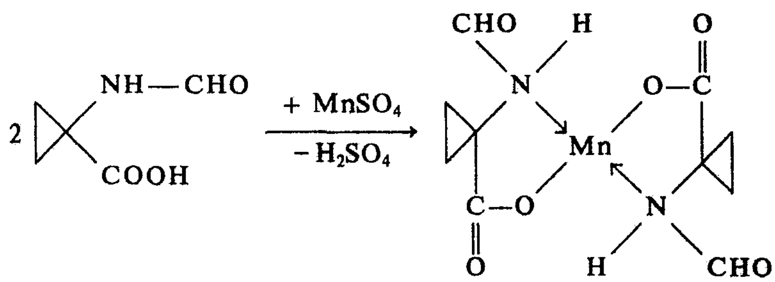

Die bei dem erfindungsgemäßen Verfahren als Ausgangsstoffe benötigten Cyclopropancarbonsäure-Derivate sind durch die Formel (II) allgemein definiert. In dieser Formel hat R diejenigen Bedeutungen, die bereits im Zusammenhang mit der Beschreibung der erfindungsgemäßen Stoffe der Formel (Ia) für diesen Rest genannt wurden.

Als Beispiele für Verbindungen der Formel (II) seien genannt:
1-Amino-cyclopropancarbonsäure, 1-Formylamino-cyclopropancarbonsäure, 1-Acetylamino-cyclopropancarbonsäure und 1-Benzoylamino-cyclopropancarbonsäure.

Die Verbindungen der Formel (II) sind bereits bekannt (vgl. DE-A-2 824 517 und EP-A-0 005 782).

Die beim erfindungsgemäßen Verfahren weiter als Ausgangsstoffe benötigten Übergangsmetallverbindungen sind durch die Formel (III) allgemein definiert. In dieser Formel hat $M^1$ diejenige Bedeutung, die bereits im Rahmen der Bescheibung der Verbindungen der Formel (Ia) für diesen Rest genannt wurde. Z steht vorzugsweise für Sauerstoff, Carbonat, Sulfat, zwei Hydroxy-Gruppen, zwei Chlorid- oder zwei Bromid-Ionen.

Als Beispiele für die Ausgangsverbindungen der Formel (III) seien genannt:
Mangan(II)-oxid, Mangan(II)-carbonat, Zink(II)-oxid und Zink(II)-carbonat.

Die Verbindungen der Formel (III) sind bekannt.

Das erfindungsgemäße Verfahren wird in Gegenwart eines Verdünnungsmittels durchgeführt. Als Verdünnungsmittel kommen vorzugsweise protisch polare Solventien in Betracht. Hierzu gehören insbesondere Wasser und Alkohole, wie Methanol, Ethanol und Propanol. Wasser wird als Lösungsmittel besonders bevorzugt.

Die Reaktionstemperatur kann beim erfindungsgemäßen Verfahren innerhalb eines größeren Bereichs variiert werden. Im allgemeinen arbeitet man bei Temperaturen zwischen 0 und 100° C, vorzugsweise zwischen 20 und 100° C. Das erfindungsgemäße Verfahren wird im allgemeinen bei Normaldruck durchgeführt.

Zur Durchführung des erfindungsgemäßen Verfahrens setzt man im allgemeinen auf 1 Mol Ausgangsverbindung der Formel (II) zwischen 0,5 und 1 Mol, vorzugsweise zwichen 0,55 und 0,8 Mol Ausgangsverbindung der Formel (III) ein. Die Ausgangsstoffe werden mit dem Verdünnungsmittel vermischt und gegebenenfalls bei erhöhter Temperatur bis zum Ende der Umsetzung gerührt. Die Aufarbeitung erfolgt nach üblichen Methoden. Im allgemeinen geht man so vor, daß man das noch heiße Reaktionsgemisch filtriert, das Filtrat abkühlt, das Produkt gegebenenfalls durch Zugabe eines organischen Verdünnungsmittels, wie zum Beispiel Aceton, ausfällt und durch Absaugen isoliert.

Diejenigen erfindungsgemäß verwendbaren Verbindungen, die nicht von der Formel (Ia) umfaßt werden, lassen sich ebenfalls nach dem erfindungsgemäßen Verfahren herstellen.

Die erfindungsgemäß verwendbaren Wirkstoffe greifen in den Metabolismus der Pflanzen ein und können deshalb als Wachstumsregulatoren eingesetzt werden.

Für die Wirkungsweise von Pflanzenwachstumsregulatoren gilt nach der bisherigen Erfahrung, daß ein Wirkstoff auch mehrere verschiedenartige Wirkungen auf Pflanzen ausüben kann. Die Wirkungen der Stoffe hängen im wesentlichen ab von dem Zeitpunkt der Anwendung bezogen auf das Entwicklungsstadium der Pflanze sowie von den auf die Pflanzen oder ihre Umgebung ausgebrachten Wirkstoffmengen und von der Art der Applikation. In jedem Fall sollen Wachstumsregulatoren die Kulturpflanzen in bestimmter gewünschter Weise beeinflussen.

Pflanzenwuchsregulierende Stoffe können zum Beispiel zur Hemmung des vegetativen Wachstums der Pflanzen eingesetzt werden. Eine derartige Wuchshemmung ist unter anderem bei Gräsern von wirtschaftlichem Interesse, denn dadurch kann die Häufigkeit der Grasschnitte in Ziergärten, Park- und Sportanlagen, an Straßenrändern, auf Flughäfen oder in Obstanlagen, reduziert werden. Von Bedeutung ist auch die Hemmung des Wuchses von krautigen und holzigen Pflanzen an Straßenrändern und in der Nähe von Pipelines oder Überlandleitungen oder ganz allgemein in Bereichen, in denen ein starker Zuwachs der Pflanzen unerwünscht ist.

Wichtig ist auch die Anwendung von Wachstumsregulatoren zur Hemmung des Längenwachstums von Getreide. Hierdurch wird die Gefahr des Umknickens (»Lagerns«) der Pflanzen vor der Erste verringert oder vollkommen beseitigt. Außerdem können Wachstumsregulatoren bei Getreide eine Halmverstärkung hervorrufen, die ebenfalls dem Lagern entgegenwirkt. Die Anwendung von Wachstumsregulatoren zur Halmverkürzung und Halmverstärkung erlaubt es, höhere Düngermengen auszubringen, um den Ertrag zu steigern, ohne daß die Gefahr besteht, daß das Getreide lagert.

Eine Hemmung des vegetativen Wachstums ermöglicht bei vielen Kulturpflanzen eine dichtere Anpflanzung, so daß Mehrerträge, bezogen auf die Bodenfläche, erzielt werden können. Ein Vorteil der so erzielten kleineren Pflanzen ist auch, daß die Kultur leichter bearbeitet und beerntet werden kann.

Eine Hemmung des vegetativen Wachstums der Pflanzen kann auch dadurch zu Ertragsteigerungen führen, daß die Nährstoffe und Assimilate in stärkerem Maße der Blüten- udn Fruchtbildung zugute kommen als den vegetativen Pflanzenteilen.

Mit Wachstumsregulatoren läßt sich häufig auch eine Förderung des vegetativen Wachstums erzielen. Dies ist von großem Nutzen, wenn die vegetativen Pflanzenteile geerntet werden. Eine Förderung des vegetativen Wachstums kann aber auch gleichzeitig zu einer Förderung des generativen Wachstums führen, dadurch daß mehr Assimilate gebildet werden, so daß mehr oder größere

Früchte entstehen.

Ertragssteigerungen können in manchen Fällen durch einen Eingriff in den pflanzlichen Stoffwechsel erreicht werden, ohne daß sich Änderungen des vegetativen Wachstums bemerkbar machen. Ferner kann mit Wachstumsregulatoren eine Veränderung der Zusammensetzung der Pflanzen erreicht werden, was wiederum zu einer Qualitätsverbesserung der Ernteprodukte führen kann. So ist es beispielsweise möglich, den Gehalt an Zucker in Zuckerrüben, Zuckerrohr, Ananas sowie in Zitrusfrüchten zu erhöhen oder den Proteingehalt in Soja oder Getreide zu steigern. Auch ist es beispielsweise möglich, den Abbau erwünschter Inhaltsstoffe, wie z. B. Zucker in Zuckerrüben oder Zuckerrohr, mit Wachstumsregulatoren vor oder nach der Ernte zu hemmen. Außerdem läßt sich die Produktion oder der Abfluß von sekundären Pflanzeninhaltsstoffen positiv beeinflussen. Als Beispiel sei die Stimulierung des Latexflußes bei Gummibäumen genannt.

Unter dem Einfluß von Wachstumsregulatoren kann es zur Ausbildung parthenokarper Früchte kommen. Ferner kann das Geschlecht der Blüten beeinflußt werden. Auch kann eine Sterilität des Pollens erzeugt werden, was bei der Züchtung und Herstellung von Hybridsaatgut eine große Bedeutung hat.

Durch den Einsatz von Wachstumsregulatoren läßt sich die Verzweigung der Pflanzen steuern. Einerseits kann durch Brechen der Apikaldominanz die Entwicklung von Seitentrieben gefördert werden, was besonders im Zierpflanzenbau auch in Verbindung mit einer Wuchshemmung sehr erwünscht sein kann. Andererseits ist es aber auch möglich, das Wachstum der Seitentriebe zu hemmen. Für diese Wirkung besteht z. B. großes Interesse im Tabakanbau oder bei der Anpflanzung von Tomaten.

Unter dem Einfluß von Wachstumsregulatoren kann der Blattbestand der Pflanzen so gesteuert werden, daß ein Entblättern der Pflanzen zu einem gewünschten Zeitpunkt erreicht wird. Eine derartige Entlaubung spielt bei der mechanischen Beerntung der Baumwolle eine große Rolle ist aber auch in anderen Kulturen wie z. B. im Weinbau zur Erleichterung der Ernte von Interesse. Eine Entlaubung der Pflanzen kann auch vorgenommen werden, um die Transpiration der Pflanzen vor dem Verpflanzen herabzusetzen.

Ebenso läßt sich mit Wachstumsregulatoren der Fruchtfall steuern. Einerseits kann ein vorzeitiger Fruchtfall verhindert werden. Andererseits kann aber auch der Fruchtfall oder sogar das Abfallen der Blüten bis zu einem gewünschten Maße gefördert werden (»Ausdünnung«), um die Alternanz zu brechen. Unter Alternanz versteht man die Eigenart einiger Obstarten, endogen bedingt von Jahr zu Jahr sehr unterschiedliche Erträge zu bringen. Schließlich ist es möglich, mit Wachstumsregulatoren zum Zeitpunkt der Ernte die zum Ablösen der Früchte erforderlichen Kräfte zu reduzieren, um eine mechanische Beerntung zu ermöglichen oder eine manuelle Beerntung zu erleichtern.

Mit Wachstumsregulatoren läßt sich ferner eine Beschleunigung oder auch Verzögerung der Reife des Erntegutes vor oder nach der Ernte erreichen. Dieses ist von besonderem Vorteil, weil sich dadurch eine optimale Anpassung an die Bedürfnisse des Marktes herbeiführen läßt.

Weiterhin können Wachstumsregulatoren in manchen Fällen die Fruchtausfärbung verbessern. Darüber hinaus kann mit Wachstumsregulatoren auch eine zeitliche Konzentrierung der Reife erzielt werden. Damit werden die Voraussetzungen dafür geschaffen, daß z. B. bei Tabak, Tomaten oder Kaffee eine vollständige mechanische oder manuelle Beerntung in einem Arbeitsgang vorgenommen werden kann.

Durch Anwendung von Wachstumsregulatoren kann ferner die Samen- oder Knospenruhe der Pflanzen beeinflußt werden, so daß die Pflanzen, wie z. B. Ananas oder Zierpflanzen in Gärtnereien, zu einem Zeitpunkt keimen, austreiben oder blühen, an dem sie normalerweise hierzu keine Bereitschaft zeigen. Eine Verzögerung des Austriebes von Knospen oder der Keimung von Samen mit Hilfe von Wachstumsregulatoren kann in frostgefährdeten Gebieten erwünscht sein, um Schädigungen durch Spätfröste zu vermeiden.

Schließlich kann mit Wachstumsregulatoren eine Resistenz der Pflanzen gegen Frost, Trockenheit oder hohen Salzgehalt des Bodens induziert werden. Hierdurch wird die Kultivierung von Pflanzen in Gebieten möglich, die hierzu normalerweise ungeeignet sind.

Die Wirkstoffe können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wassr als Streckmittel können z. B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliophatische Kohlenwasserstoffe, wie Cyclohexan oder Paraffine, z. B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten

gasförmigen Streckmitteln oder Trägerstoffen sind solche Flüssigkeiten gemeint, welche bei normaler Temperatur und unter Normaldruck gasförmig sind, z. B. Aerosol-Treibgase, wie Halogenkohlenwasserstoffe sowie Butan, Propan, Stickstoff und Kohlendioxid. Als feste Trägerstoffe kommen in Frage: z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z. B. nichtiogene und anionische Emulgatoren, wie Polyoxyethylen-Fettsäureester, Polyoxyethylen-Fettalkoholether, z. B. Alkylarylpolyglycolether, Alkylsulfonate, Alkylsulfate, Arylsulfonate sowie Eiweißhydrolysate. Als Dispergiermittel kommen in Frage: z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise 0,5 und 90%.

Die erfindungsgemäß verwendbaren Wirkstoffe können in den Formulierungen in Mischung mit anderen bekannten Wirkstoffen vorliegen, wie Fungizide, Insektizide, Akarizide und Herbizide, sowie in Mischungen mit Düngemitteln und anderen Wachstumsregulatoren.

Die Wirkstoffe können als solche, in Form ihrer Formulierungen oder den daraus bereiteten Anwendungsformen, wie gebrauchsfertige Lösungen, emulgierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z. B. durch Gießen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Die Aufwandmengen können in einem größeren Bereich variiert werden. Im allgemeinen verwendet man pro Hektar Bodenfläche 0,01 bis 50 kg, bevorzugt 0,05 bis 10 kg an Wirkstoff.

Für die Anwendungszeit gilt, daß die Anwendung der Wachstumsregulatoren in einem bevorzugten Zeitraum vorgenommen wird, dessen genaue Abgrenzung sich nach den klimatischen und vegetativen Gegebenheiten richtet.

Die Herstellung und die Verwendung der Stoffe der Formel (I) geht aus den nachfolgenden Beispielen hervor.

## Herstellungsbeispiele

### Beispiel 1

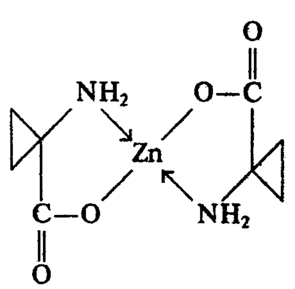

4,4 g (35 mMol) Zinkcarbonat werden zu einer Lösung von 5,0 g (50 mMol) 1-Amino-cyclopropancarbonsäure in 50 ml Wasser gegeben, und das Gemisch wird 4 Stunden unter Rückfluß zum Sieden erhitzt. Anschließend wird heiß filtriert, das Filtrat abgekühlt, das Produkt mit Aceton ausgefällt und durch Filtration isoliert. Man erhält 5,6 g (85% der Theorie) des durch obige Formel wiedergegebenen Zinkkomplexes von 1-Amino-cyclopropancarbonsäure in Form eines weißen Pulvers.

In der im Beispiel 1 angegebenen Weise werden auch die in der nachstehenden Tabelle 1 formelmäßig aufgeführten Verbindungen der Formel (I) hergestellt. Bei der Synthese der Mangankomplexverbindungen, bei der jeweils Mangan-(II)-carbonat als Ausgangsstoff der Formel (III) eingesetzt wurde, arbeitete man jeweils unter Stickstoffatmosphäre. Die Schmelzpunkte der Produkte konnten wegen der beginnenden Zersetzung bzw. Sublimation der Produkte nicht exakt bestimmt werden.

Tabelle 1

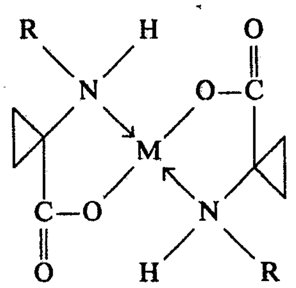

(I)

| Beispiel Nr. | R | M | Ausbeute (% der Theorie) |
|---|---|---|---|
| 2 | H | Mn | 86 |
| 3 | H | Cu | 86 |
| 4 | CHO | Mn | 95 |
| 5 | CHO | Zn | 89 |

In den nachstehenden Verwendungsbeispielen wird die nachstehend angegebene Verbindung als Vergleichssubstanz eingesetzt:

(A) = 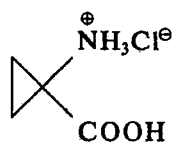

1-Amino-cyclopropan-1-carbonsäure-hydrochlorid (bekannt aus DE-A-2 824 517 bzw. EP-A-0 005 782).

Beispiel A

Ethylenbildung

Lösungsmittel: 30 Gew.-Teile Dimethylformamid
Emulgator: 1 Gew.-Teil Polyoxyethylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Aus Sojabohnenblättern werden Blattstücke gleicher Größe gestanzt. Diese werden zusammen mit 1 ml Wirkstoffzubereitung bzw. Kontrollösung in luftdicht verschließbare Gefäße gegeben. Nach 24 Stunden wird das Ethylen, das sich in den Gefäßen angesammelt hat, mit üblichen Nachweismethoden bestimmt. Die Ethylenentwicklung der mit den Wirkstoffzubereitungen behandelten Blattstücke wird mit derjenigen der Kontrollen verglichen.

Es bedeuten:

| | |
|---|---|
| 0 | Ethylenentwicklung wie bei der Kontrolle |
| + | leicht erhöhte Ethylenentwicklung |
| + + | stark erhöhte Ethylenentwicklung |
| + + + | sehr stark erhöhte Ethylenentwicklung |

In diesem Test zeigen die Verbindungen gemäß Beispielen (1), (2), (3) und (5) eine sehr starke und die Verbindung (4) eine starke Wirkung.

Beispiel B

Stimulierung der $CO_2$-Fixierung bei Sojabohnen

Lösungsmittel: 30 Gew.-Teile Dimethylformamid
Emulgator: 1 Gew.-Teil Polyoxyethylen-Sorbitan-Monolaurat

Zur Herstellung einer zweckmäßigen Wirkstoffzubereitung vermischt man 1 Gew.-Teil Wirkstoff mit den angegebenen Mengen Lösungsmittel und Emulgator und füllt mit Wasser auf die gewünschte Konzentration auf.

Sojabohnen werden im Gewächshaus bis zur vollen Entfaltung des ersten Folgeblattes angezogen. In diesem Stadium werden die Pflanzen tropfnaß mit den Wirkstoffzubereitungen besprüht. Im weiteren Verlauf des Emprimentes wird die $CO_2$-Fixierung der Pflanzen mit üblichen Methoden gemessen. Die Werte werden mit denen der nicht mit Wirkstoff behandelten Kontrollpflanzen verglichen.

Es bedeuten:

| | |
|---|---|
| — | Hemmung der $CO_2$-Fixierung |
| 0 | $CO_2$-Fixierung wie bei der Kontrolle |
| + | geringe Stimulierung der $CO_2$-Fixierung |
| ++ | starke Stimulierung der $CO_2$-Fixierung |
| +++ | sehr starke Stimulierung der $CO_2$-Fixierung |

In diesem Test bewirkt die Verbindung gemäß Beispiel (3) eine wesentlich stärkere Stimulierung der $CO_2$-Fixierung als die Vergleichssubstanz (A).

**Patentansprüche**

1. 1-Amino-cyclopropancarbonsäure-Metallkomplexverbindungen der Formel

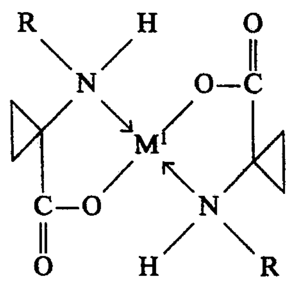

(Ia)

in welcher

R für Wasserstoff oder den Rest der Formel $-CO-R^1$ steht, worin
$R^1$ für Wassrstoff, Alkyl mit 1 bis 4 Kohlenstoffatomen oder Phenyl steht,
und
$M^1$ für Zink, Mangan, Eisen, Cobalt oder Nickel steht.

2. Verfahren zur Herstellung von 1-Amino-cyclopropancarbonsäure-Metallkomplexverbindungen der Formel

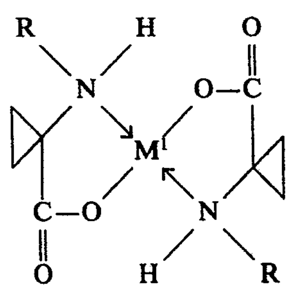

(Ia)

in welcher

R für Wasserstoff oder den Rest der Formel $-CO-R^1$ steht, worin
$R^1$ für Wasserstoff, Alkyl mit 1 bis 4 Kohlenstoffatomen oder Phenyl steht,
und
$M^1$ für Zink, Mangan, Eisen, Cobalt oder Nickel steht,

dadurch gekennzeichnet, daß man Cyclopropancarbonsäure-Derivate der Formel

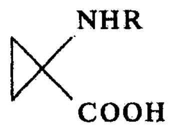

(II)

in welcher

R die oben angegebene Bedeutung hat,

mit Übergangsmetallverbindungen der Formel

$M^1Z$ (III)

in welcher

$M^1$ die oben angegebene Bedeutung hat und
Z für Sauerstoff, Carbonat, Sulfat, zwei Hydroxy-Gruppen oder zwei Halogenid-Ionen steht,

in Gegenwart eines Verdünnungsmittels umsetzt.

3. Pflanzenwuchsregulierende Mittel, gekennzeichnet durch einen Gehalt an mindestens einer 1-Aminocyclopropancarbonsäure-Metallkomplexverbindung der Formel

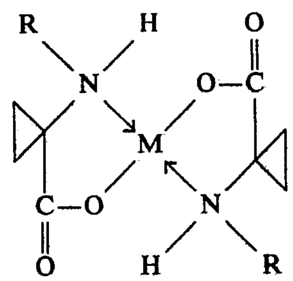

(I)

in welcher

R für Wasserstoff oder den Rest der Formel $-CO-R^1$ steht, worin
$R^1$ für Wasserstoff, Alkyl mit 1 bis 4 Kohlenstoffatomen oder Phenyl steht,
und
M für Kupfer, Zink, Mangan, Eisen, Cobalt oder Nickel steht.

4. Verfahren zur Regulierung des Pflanzenwachstums, dadurch gekennzeichnet, daß man 1-Amino-cyclopropancarbonsäure-Metallkomplexverbindungen der Formel (I) auf die Pflanzen und/oder deren Lebensraum ausbringt.

5. Verwendung von 1-Amino-cyclopropancarbonsäure-Metallkomplexverbindungen der Formel (I) zur Regulierung des Pflanzenwachstums.

6. Verfahren zur Herstellung von pflanzenwuchsregulierenden Mitteln, dadurch gekennzeichnet, daß man 1-Amino-cyclopropancarbonsäure-Metallkomplexverbindungen der Formel (I) mit Streckmitteln und/oder oberflächenaktiven Stoffen vermischt.

## Claims

1. 1-Amino-cyclopropanecarboxylic acid metal complex compounds of the formula

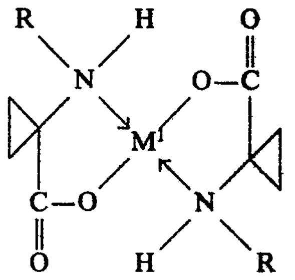

(Ia)

in which

R represents hydrogen or the radical of the formula $-CO-R^1$, wherein
$R^1$ represents hydrogen, alkyl having 1 to 4 carbon atoms or phenyl,
and
$M^1$ represents zinc, manganese, iron, cobalt or nickel.

2. Process for the preparation of 1-amino-cyclopropanecarboxylic acid metal complex compounds of the formula

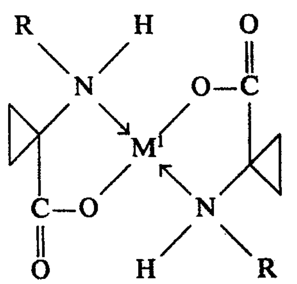

(Ia)

in which

R represents hydrogen or the radical of the formula $-CO-R^1$, wherein
$R^1$ represents hydrogen, alkyl having 1 to 4 carbon atoms or phenyl,
and
$M^1$ represents zinc, manganese, iron, cobalt or nickel,

characterised in that cyclopropanecarboxylic acid derivatives of the formula

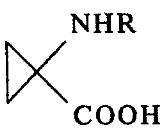

(II)

in which

R has the meaning given above,

are reacted with transition metal compounds of the formula

$M^1Z$ (III)

in which

$M^1$ has the meaning given above and
Z represents oxygen, carbonate, sulphate, two hydroxyl groups or two halide ions,

in the presence of a diluent.

3. Plant growth-regulating agents characterised in that they contain at least one 1-amino-cyclopropanecarboxylic acid metal complex compound of the formula

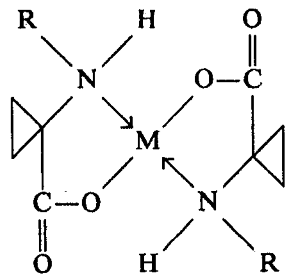

(I)

in which

R represents hydrogen or the radical of the formula $-CO-R^1$, wherein
$R^1$ represents hydrogen, alkyl with 1 to 4 carbon atoms or phenyl,
and
M represents copper, zinc, manganese, iron, cobalt or nickel.

4. Process for regulating plant growth, charcterised in that 1-amino-cyclopropanecarboxylic acid metal complex compounds of the formula (I) are applied to the plants and/or their habitat.

5. Use of 1-amino-cyclopropanecarboxylic acid metal complex compounds of the formula (I) for regulating plant growth.

6. Process for the preparation of plant growth-regulating agents, characterised in that 1-amino-cyclopropanecarboxylic acid metal complex compounds of the formula (I) are mixed with extenders and/or surfaceactive substances.

**Revendications**

1. Complexes métalliques d'acide 1-amino-cyclopropane-carboxyliques, de formule

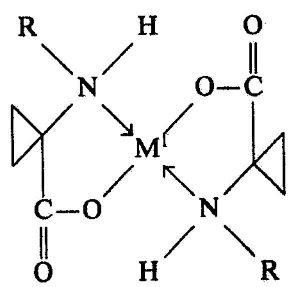

(Ia)

dans laquelle

R représente l'hydrogène ou le reste de formule $-CO-R^1$ dans lequel
$R^1$ représente l'hydrogène, un groupe alkyle en $C_1-C_4$ ou phényle
et
$M^1$ représente le zinc, le manganèse, le fer, le cobalt ou le nickel.

2. Procédé de préparation de complexes métalliques d'acides 1-amino-cyclopropane-carboxyliques de formule

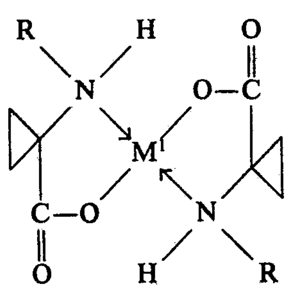

(Ia)

dans laquelle

R représente l'hydrogène ou le reste de formule $-CO-R^1$ dans lequel
$R^1$ représente l'hydrogène, un groupe alkyle en $C_1-C_4$ ou phényle, et
$M^1$ représente le zinc, le manganèse, le fer, le cobalt ou le nickel,

caractérisé en ce que l'on fait réagir des dérivés d'acides cyclopropane-carboxyliques de formule

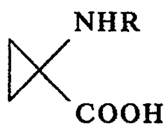

(II)

dans laquelle

R a les significations indiquées ci-dessus

avec des composés de métaux de transition de formule

$M^1Z$ (III)

dans laquelle

$M^1$ a les significations indiquées ci-dessus et
Z représente l'oxygène, un groupe carbonate, sulfate, deux groupes hydroxy ou deux ions halogénure,

en présence d'un diluant.

3. Produit régulateur de la croissance des végétaux, caractérisé en ce qu'il contient au moins un complexe métallique d'acide 1-amino-cyclopropane-carboxylique de formule

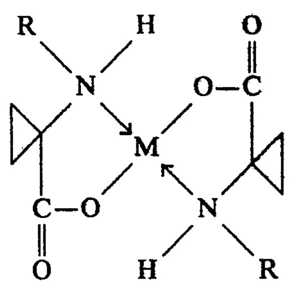

(I)

dans laquelle

R représente l'hydrogène ou le reste de formule $-CO-R^1$ dans lequel
$R^1$ représente l'hydrogène, un groupe alkyle en $C_1-C_4$ ou phényle, et
M représente le cuivre, le zinc, le manganèse, le fer, le cobalt ou le nickel.

4. Procédé pour la régulation de la croissance des végétaux, caractérisé en ce que l'on applique sur les végétaux et/ou leur habitat des complexes métalliques d'acides 1-amino-cyclopropane-carboxyliques de Formule I.

5. Utilisation des complexes métalliques d'acides 1-amino-cyclopropane-carboxyliques de formule I pour la régulation de la croissance des végétaux.

6. Procédé de préparation de produits régulateurs de la croissance des végétaux, caractérisé en ce que l'on mélange des complexes métalliques d'acides 1-aminocyclopropane-carboxyliques de formule I avec des diluants et/ou des substances tensio-actives.